# FASCICULE DE BREVET EUROPEEN

(11) **EP 4 547 498 B1**
(45) Date de publication et mention de la délivrance du brevet: **25.02.2026**
(21) Numéro de dépôt: 23735777.7
(22) Date de dépôt: 29.06.2023
(51) Int. Cl.: B60C 1/00, C08G 63/00, C08L 9/06, C08L 9/00, C08G 63/06

(54) **COMPOSITION DE CAOUTCHOUC COMPRENANT UN PLASTIFIANT BIOSOURCÉ DE LA FAMILLE DES ESTOLIDES**
KAUTSCHUKZUSAMMENSETZUNG MIT EINEM BIOBASIERTEN WEICHMACHER AUS DER FAMILIE DER ESTOLIDE
RUBBER COMPOSITION COMPRISING A BIO-BASED PLASTICIZER FROM THE FAMILY OF ESTOLIDES

(30) Priorité: 30.06.2022 FR 2206641
(43) Date de publication de la demande: 07.05.2025
(73) Titulaire: COMPAGNIE GENERALE DES ETABLISSEMENTS MICHELIN, 63000 Clermont-Ferrand (FR)
(72) Inventeur: RODRIGUES, Arnaud, 63040 Clermont-Ferrand Cedex 09 (FR); PAWLAK, Angélique, 63040 Clermont-Ferrand Cedex 09 (FR); PAGANO, Salvatore, 63040 Clermont-Ferrand Cedex 09 (FR)
(74) Mandataire: M.F.P. Michelin
(86) Numéro de dépôt international: PCT/EP2023/067787
(87) Numéro de publication internationale: WO 2024/003226

(56) Documents cités:
- EP-A2- 1 867 671
- US-A1- 2016 032 211

## Description

### Domaine technique

La présente invention concerne une composition de caoutchouc pour le pneu, notamment utilisable en flanc, comprenant un système plastifiant entièrement ou partiellement biosourcé.

### Technique antérieure

Dans le contexte actuel d'économie d'énergie et de préservation de l'environnement, les industriels sont à la recherche constante de nouvelles sources renouvelables utilisables comme matières premières pour la fabrication de produits.

Dans cette optique, les industriels du pneumatique recherchent à diminuer l'impact de la fabrication des pneumatiques et leur utilisation sur l'environnement. Parmi les leviers dont ils disposent, il y a la substitution progressivement les matériaux issus de ressources fossiles par des matériaux durables. Les matériaux d'origine biosourcée constituent une partie de ces matériaux durables. Toutefois, le remplacement de produits issus du pétrole dans les compositions constitutives du pneu, par des produits d'origine biosourcée ne doit pas se faire au détriment de la sécurité et des performances attendues. Ainsi les produits d'origine biosourcée utilisés dans le pneu doivent être compatibles avec les autres constituants de la composition de caoutchouc les contenant afin d'assurer une uniformité de la composition pour ne pas dégrader les compromis de propriétés, et être techniquement aussi performants que les produits préparés à partir de matières premières d'origine fossile.

Parmi les éléments constitutifs du pneu, les flancs externes doivent notamment présenter une bonne résistance aux agressions externes comme les chocs et les déformations. Les flancs externes sont les zones radialement externes du pneu, qui relient le sommet du pneu aux deux bourrelets. Il est donc important que les compositions de caoutchouc constituant les flancs des pneus présentent de bonnes propriétés mécaniques, notamment des bonnes propriétés à rupture.

Par ailleurs, des estolides et leur synthèse sont décrits dans WO2012173671A1. Ce document mentionne l'intérêt de l'utilisation de ces dérivés d'acides gras dans des compositions lubrifiantes et des compositions plastifiées de type plastisol, du fait de leurs propriétés biodégradables. L'utilisation des estolides comme huile de base est décrite comme permettant ainsi de réduire la pollution et la toxicité liées au relargage dans l'environnement de ces compositions utilisant habituellement des composés d'origine fossile comme huile de base.

Le problème technique qui se pose maintenant est de fournir une composition de caoutchouc pour le pneu qui contribue à réduire son empreinte environnementale tout en maintenant ses performances notamment en vue d'une utilisation en flanc. Plus particulièrement, un objectif de la présente invention est de réduire l'empreinte environnementale d'une composition de caoutchouc pour le pneu tout en assurant le maintien des propriétés mécaniques de la composition.

### Exposé de l'invention

La Demanderesse a découvert, de façon surprenante, que le remplacement de plastifiants issus du pétrole dans des compositions de caoutchouc pour le pneu par des estolides permet une amélioration significative des propriétés limites à la rupture, la rigidité à faible déformation restant inchangée. De telles propriétés sont particulièrement appréciables pour une utilisation dans le flanc d'un pneu.

### Résumé de l'invention

L'invention a donc pour objet une composition de caoutchouc à base d'au moins un composant élastomère comprenant un élastomère isoprénique et un élastomère butadiénique, une charge renforçante comprenant du noir de carbone à titre de charge majoritaire, un système de réticulation et un système plastifiant comprenant un plastifiant biosourcé choisi parmi les estolides, selon l'une des réalisations qui suivent.
1. Composition de caoutchouc à base d'au moins :
   - 100 pce d'une matrice élastomère comprenant un élastomère isoprénique et un élastomère butadiénique,
   - 20 à 120 pce d'une charge renforçante comprenant du noir de carbone à titre de charge majoritaire,
   - 5 à 120 pce d'un système plastifiant comprenant au moins un estolide de masse molaire moyenne en poids (Mw) inférieure à 5000g/mol déterminé par chromatographie d'exclusion stérique (SEC), la méthode étant décrite dans la description,
   - un système de réticulation.
2. Composition selon la réalisation précédente dans laquelle le taux d'élastomère isoprénique est compris dans un domaine allant de 10 à 60 pce, de préférence de 15 à 50 pce.
3. Composition selon l'une quelconque des réalisations précédentes dans laquelle l'élastomère isoprénique comprend majoritairement du caoutchouc naturel.
4. Composition selon la réalisation précédente dans laquelle l'élastomère isoprénique est essentiellement constitué de caoutchouc naturel.
5. Composition selon l'une quelconque des réalisations précédentes dans laquelle le taux d'élastomère butadiénique est compris dans un domaine allant de 40 à 90 pce, de préférence de 50 à 85 pce.
6. Composition selon l'une quelconque des réalisations précédentes dans laquelle l'élastomère butadiénique est un polybutadiène.
7. Composition selon l'une quelconque des réalisations précédentes dans laquelle la charge renforçante est essentiellement constituée de noir de carbone.
8. Composition selon l'une quelconque des réalisations précédentes dans laquelle le noir de carbone est présent selon un taux compris dans un domaine allant de 20 pce à 100 pce, de préférence allant de 20 à 80 pce, plus préférentiellement allant de 25 à 60 pce.
9. Composition selon l'une quelconque des réalisations précédentes dans laquelle le taux d'estolide(s) est compris dans un domaine allant de 5 à 50 pce, de préférence de 10 à 30 pce.
10. Composition selon l'une quelconque des réalisations précédentes dans laquelle le système plastifiant comprend de 10 à 100% en poids d'au moins un estolide, de préférence 40 à 100% en poids, par rapport au poids total du système plastifiant.
11. Composition selon l'une quelconque des réalisations précédentes dans laquelle le système plastifiant est essentiellement constitué d'au moins un estolide.
12. Composition selon l'une quelconque des réalisations précédentes dans laquelle l'au moins un estolide est un estolide d'un acide gras, saturé ou insaturé, linéaire ou ramifié, en C₈ à C₃₄, estérifié avec un alcool gras.
13. Composition selon l'une quelconque des réalisations précédentes dans laquelle l'au moins un estolide est un estolide d'un acide gras hydroxylé, linéaire ou ramifié, saturé ou insaturé, en C₁₂ à C₂₂, en particulier en C₁₆ à C₂₀ et plus particulièrement en C₁₈.
14. Composition selon l'une quelconque des réalisations précédentes dans laquelle l'au moins un estolide est un estolide de l'acide ricinoléique.
15. Composition selon l'une quelconque des réalisations précédentes dans laquelle l'estolide est un estolide estérifié avec un alcool gras, saturé ou insaturé, linéaire ou ramifié, en C₈ à C₃₄.
16. Composition selon l'une quelconque des réalisations précédentes dans laquelle l'estolide est un estolide estérifié avec un alcool gras ayant une chaîne carbonée aliphatique ramifiée en C₁₂ à C₂₂, en particulier en C₁₆ à C₂₀ et plus particulièrement en C₁₈.
17. Composition selon l'une quelconque des réalisations précédentes dans laquelle l'estolide est un estolide estérifié avec l'alcool isotéarylique.
18. Composition selon l'une quelconque des réalisations précédentes dans laquelle l'au moins un estolide est un composé de formule I : 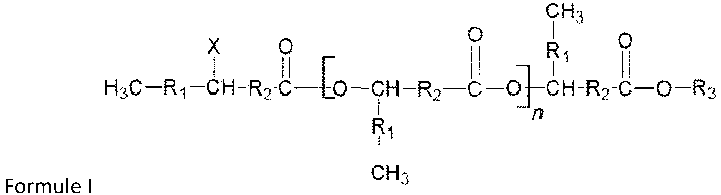 dans laquelle,
   n est un entier variant de 1 à 5;
   X est un atome d'hydrogène H ou un groupement hydroxyle -OH;
   R1, identiques ou différents, représentent des radicaux aliphatiques divalents, saturés ou insaturés, linéaires ou ramifiés, en C₁ - C₂₀, préférentiellement les R1 sont identiques;
   R2, identiques ou différents, sont des radicaux aliphatiques divalents, saturés ou insaturés, linéaires ou ramifiés, en C₁ - C₂₀, préférentiellement les R2 sont identiques;
   le nombre de carbone dans chaque unité d'acide gras étant compris dans un domaine allant de 8 à 34, de préférence de 12 à 22, préférentiellement encore de 16 à 20, en particulier 18;
   R3 représente un atome d'hydrogène H ou un groupement aliphatique, saturé ou insaturé, linéaire ou ramifié, en C₈ à C₂₆, notamment en C₁₂ à C₂₂, en particulier en C₁₆ à C₂₀ et plus particulièrement en C₁₈.
19. Composition selon la réalisation 18 dans laquelle dans la formule I, X représente un groupement hydroxyle -OH.
20. Composition selon la réalisation 18 ou 19 dans laquelle dans la formule I, le nombre de carbone dans chaque unité d'acide gras est compris dans un domaine allant de 16 à 20, en particulier 18.
21. Composition selon l'une quelconque des réalisations 18 à 20 dans laquelle dans la formule I, R3 représente un groupement aliphatique saturé ramifié en C₁₆ à C₂₀ et plus particulièrement en C₁₈.
22. Composition selon l'une quelconque des réalisations précédentes dans laquelle l'au moins un estolide est un estolide d'acide ricinoléique estérifié avec l'alcool isotéarylique.

L'invention a également pour objet un pneu dont un des éléments constitutifs comprend une composition de caoutchouc selon l'une quelconque des réalisations précédentes. Plus particulièrement, l'invention a alors pour objet un pneu pourvu d'un flanc externe, ledit flanc externe comprenant au moins une composition de caoutchouc selon l'une quelconque des réalisations précédentes.

### Définitions

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation. A titre d'exemple, une composition à base d'une matrice élastomérique et de soufre comprend la matrice élastomérique et le soufre avant cuisson, alors qu'après cuisson le soufre n'est plus détectable car ce dernier a réagi avec la matrice élastomérique en formant des ponts soufrés (polysulfures, disulfures, mono-sulfure).

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. A titre préférentiel, il s'agit du composé qui représente par exemple plus de 50%, plus de 60%, plus de 70%, plus de 80%, plus de 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé "minoritaire" est un composé qui ne représente pas la fraction massique la plus grande parmi les composés du même type.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

### Description détaillée de l'invention

### 1 Matrice élastomère

La composition de caoutchouc selon l'invention comprend une matrice élastomère comprenant un élastomère isoprénique et un élastomère butadiénique.

On entend plus particulièrement par élastomère isoprénique et élastomère butadiénique susceptibles d'être utilisés dans les compositions conformes à l'invention :
a) tout homopolymère obtenu par polymérisation d'un monomère isoprène respectivement d'un monomère butadiène;
b) tout copolymère obtenu par copolymérisation d'un monomère isoprène respectivement d'un monomère butadiène avec un ou plusieurs autres monomères. Comme autre monomère on peut citer l'éthylène, une oléfine et un diène, conjugué ou non, différent de l'isoprène respectivement du butadiène.

Par "élastomère isoprénique" ou "polyisoprène", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle IIR), d'isoprène-styrène (SIR), d'isoprène-butadiène (BIR) ou d'isoprène-butadiène-styrène (SBIR). De préférence, le polyisoprène est choisi dans le groupe constitué par du caoutchouc naturel, un polyisoprène de synthèse et un de leurs mélanges, de préférence encore, le polyisoprène comprend majoritairement, voire exclusivement du caoutchouc naturel.

De préférence, le polyisoprène comporte un taux massique de liaisons cis 1,4 d'au moins 90%, plus préférentiellement d'au moins 98% par rapport à la masse du polyisoprène.

Préférentiellement, le taux de polyisoprène, de préférence le caoutchouc naturel, est de 10 à 60 pce, de manière plus préférentielle de 15 à 50 pce, plus préférentiellement encore de 20 à 50 pce et de manière très préférentielle de 25 à 45 pce.

Par "élastomère butadiénique", on entend de manière connue un homopolymère ou un copolymère de butadiène, en d'autres termes un élastomère diénique choisi dans le groupe constitué par les polybutadiènes (BR), les copolymères de butadiène tels que les copolymères de butadiène-styrène (SBR), les copolymères d'isoprène-butadiène (BIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés. De préférence, l'élastomère butadiénique est choisi dans le groupe constitué par les polybutadiènes (BR) et leurs mélanges.

De préférence, le polybutadiène (BR) comporte un taux massique de liaisons cis 1,4 d'au moins 90% par rapport à la masse du polybutadiène.

Préférentiellement, le taux d'élastomère butadiénique est de 40 à 90 pce, de manière plus préférentielle de 50 à 85 pce, plus préférentiellement encore de 50 à 80 pce et de manière très préférentielle de 55 à 75 pce.

L'élastomère isoprénique est différent de l'élastomère butadiénique.

La matrice élastomère de la composition de caoutchouc selon l'invention peut comprendre un ou plusieurs autres élastomères diéniques différents de l'élastomère butadiénique et de l'élastomère isoprénique. Le ou les élastomères diéniques peuvent être choisis, par exemple, dans le groupe constitué par le caoutchouc naturel (NR), les polyisoprènes (IR) de synthèse, les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR), les copolymères d'éthylènebutadiène (EBR) et les terpolymères d'éthylène, de butadiène et d'un autre monomère diène conjugué, notamment l'isoprène, le myrcène ou le farnésène, ou un mélange de deux ou plus de ces composés.

De préférence, la matrice élastomère de la composition de caoutchouc selon l'invention comprend majoritairement un mélange d'un élastomère isoprénique, de préférence du caoutchouc naturel, et d'un élastomère butadiénique, de préférence un polybutadiène. De préférence encore, la matrice élastomère de la composition de caoutchouc selon l'invention est essentiellement constituée d'un mélange d'un élastomère isoprénique, de préférence du caoutchouc naturel, et d'un élastomère butadiénique, de préférence un polybutadiène.

### 2 Charge renforçante

La composition de caoutchouc conforme à l'invention a pour autre caractéristique essentielle de comprendre une charge renforçante comprenant du noir de carbone à titre de charge majoritaire.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un « masterbatch » (voir par exemple demandes WO97/36724-A2 ou WO99/16600-A1).

La charge renforçante peut comprendre une autre charge renforçante. On peut utiliser à cet effet tout type de charge dite renforçante autre que du noir de carbone, connue pour ses capacités à renforcer une composition de caoutchouc utilisable notamment pour la fabrication de pneumatiques, par exemple une charge inorganique telle que de la silice.

Comme charges inorganiques renforçantes conviennent notamment des charges minérales du type siliceux, préférentiellement la silice (SiO₂) ou du type alumineux, en particulier l'alumine (Al₂O₃). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR », « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

À titre d'autres exemples de charges inorganiques susceptibles d'être utilisées dans les compositions de caoutchouc de l'invention peuvent être encore cités les charges minérales du type alumineux, en particulier de l'alumine (Al₂O₃), des oxydes d'aluminium, des hydroxydes d'aluminium, des aluminosilicates, des oxydes de titane, des carbures ou nitrures de silicium, tous du type renforçants tels que décrits par exemple dans les demandes WO99/28376-A2, WO00/73372-A1, WO02/053634-A1, WO2004/003067-A1, WO2004/056915-A2, US6610261-B1 et US6747087-B2. On peut citer notamment les alumines « Baikalox A125 » ou « CR125 » (société Baïkowski), « APA-100RDX » (Condéa), « Aluminoxid C » (Evonik) ou « AKP-G015 » (Sumitomo Chemicals).

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série « CRX2000 » ou de la série « CRX4000 » de la société Cabot Corporation.

La charge renforçante comprend majoritairement du noir de carbone. De préférence pour l'invention la charge renforçante est essentiellement constituée de noir de carbone.

De préférence le taux de noir de carbone est compris dans le domaine allant de 20 pce à 100 pce, de préférence allant de 20 à 80 pce, plus préférentiellement allant de 25 à 60 pce.

L'homme du métier saura adapter le taux total de charge renforçante selon l'utilisation concernée dans le domaine de 20 à 120 pce en fonction de l'utilisation visée de la composition de caoutchouc. Ainsi, selon certaines variantes de réalisation de l'invention le taux total de charge renforçante est de 30 à 80 pce, préférentiel de 35 à 70 pce.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

Pour coupler la charge inorganique renforçante à l'élastomère diénique, on peut utiliser de manière bien connue un agent de couplage (ou agent de liaison) au moins bifonctionnel destiné à assurer une interaction suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organo silanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

La teneur en agent de couplage dans la composition de l'invention est avantageusement inférieure ou égale à 30 pce, étant entendu qu'il est en général souhaitable d'en utiliser le moins possible. Typiquement le taux d'agent de couplage représente de 0,5% à 15% en poids par rapport à la quantité de charge inorganique renforçante. Ce taux est aisément ajusté par l'homme du métier selon le taux de charge inorganique renforçante utilisé dans la composition de l'invention.

### 3 Système de plastifiant

La composition de caoutchouc selon l'invention comprend 5 à 120 pce d'un système plastifiant et préférentiellement 10 à 80 pce.

Le système plastifiant d'une composition de caoutchouc pour le pneu peut comprendre un ou plusieurs plastifiants.

Selon l'invention, le système plastifiant de la composition de caoutchouc comprend au moins un estolide de masse molaire moyenne en poids (Mw) inférieure à 5000g/mol et de préférence comprise dans un domaine variant de 700 à 5000 g/mol, de préférence encore dans un domaine variant de 700 à 3500 g/mol. La masse molaire moyenne en poids (Mw) des estolides est mesurée par SEC (Size Exclusion Chromatography) selon la méthode décrite plus bas.

Par "au moins un estolide", on entend selon l'invention un ou plusieurs estolides.

Selon des variantes de réalisation de l'invention, le système plastifiant comprend de 10 à 100% en poids d'au moins un estolide, de préférence 40% à 100% en poids, par rapport au poids total du système plastifiant. Selon des variantes de réalisation particulières de l'invention, le système plastifiant comprend 100% en poids d'au moins un estolide, c'est-à-dire que le système plastifiant est essentiellement constitué d'au moins un estolide.

Selon l'invention, la composition de caoutchouc comprend de préférence de 5 à 50 pce, plus préférentiellement de 10 à 30 pce d'au moins un estolide.

Les estolides sont obtenus à partir d'acides gras insaturés et/ou d'acides gras saturés. Les estolides sont une classe d'esters 100% biosourcés lorsque les acides gras sont d'origine naturelle. Par "biosourcé" on entend selon l'invention, partiellement ou totalement issu de la biomasse ou partiellement ou totalement obtenu à partir de matières premières renouvelables issues de la biomasse. La structure oligomère des estolides contient des unités répétitives d'acides gras, chaque unité d'un acide gras étant estérifiée par une autre unité d'acide gras. Par exemple, le document WO2012173671A1 décrit de tels composés.

Certains estolides peuvent être obtenus à partir d'acides gras naturellement hydroxylés ou encore d'acides gras ayant subi une hydroxylation, la fonction hydroxyle de chaque unité d'un acide gras est estérifiée par la fonction acide d'un autre acide gras. Selon d'autres modes de synthèse, l'estolide sera formé par production d'un carbocation sur le site d'insaturation d'un acide gras insaturé, suivie d'une attaque nucléophile sur le carbocation par le groupe carboxylique d'un autre acide gras. Ces modes de synthèse sont connues et à la portée de l'homme du métier. Par exemple, le document WO2012173671A1 décrit des modes de synthèse des estolides.

Le lecteur comprendra qu'en vue de réduire l'impact environnemental de la composition de caoutchouc selon l'invention, par acide gras on entend très préférentiellement un acide gras d'origine naturelle, obtenu par hydrolyse d'huiles végétales, tels que, pour n'en citer que quelques exemples, les acides gras d'huile d'orange, d'huile d'avocat, d'huile de macadamia, d'huile d'olive, d'huile de soja hydrogénée, d'huile de colza, d'huile de jojoba, d'huile de palme, d'huile de ricin, d'huile de germe de blé, d'huile de safran, huiles de lin, d'huile de carthame, d'huile de maïs, d'huile de pin, d'huile de tournesol, d'huile de noix de coco, d'huile d'arachide, d'huile pépin de raisin, d'huile de grains de coton, d'huile de macadamia et leurs mélanges.

Parmi les acides gras d'origine naturelle, on peut citer à titre d'exemple :
- les acides gras linéaires saturés tels que l'acide caprylique, l'acide caprique, l'acide laurique, l'acide myristique, l'acide palmitique, l'acide stéarique, l'acide arachique, l'acide béhénique, l'acide lignocérique, l'acide cérotique,
- les acides gras ramifiés, saturés ou insaturés, tels que par exemple l'acide isostéarique, l'acide isopalmique,
- les acides gras linéaires insaturés, tels que l'acide lindérique, l'acide myristoléique, l'acide palmitoléique, l'acide oléique, l'acide linoléique, l'acide élaïdique, l'acide gadolénoïque, l'acide eicosapentaénoïque, l'acide docosahexaénoïque, l'acide érucique, l'acide brassidique, l'acide arachidonique,
- les acides gras hydroxylés tels que l'acide ricinoléique, les acides hydroxystéariques.

Selon l'invention, par "acide gras" on entend désigner un acide gras, saturé ou insaturé, linéaire ou ramifié, en C₈ à C₃₄, notamment en C₈ à C₂₆, notamment en C₁₂ à C₂₂, en particulier en C₁₆ à C₂₂. Selon des modes de réalisation préférés de l'invention, l'acide gras est un acide gras hydroxylé, linéaire ou ramifié, saturé ou insaturé, en C₁₂ à C₂₂, en particulier en C₁₆ à C₂₀ et plus particulièrement en C₁₈. Préférentiellement encore, l'acide gras est l'acide ricinoléique.

Selon des modes de réalisation préférentiels de l'invention, l'estolide est un estolide qui a subi une estérification ultime avec un alcool gras aliphatique en C₁ à C₃₄, saturé ou insaturé, linéaire ou ramifié, de préférence un alcool gras. Dans le cadre de l'invention, on désigne également un tel estolide estérifié par la dénomination "estolide".

Au sens de la présente invention, on entend plus particulièrement désigner par l'expression "alcool gras", un alcool obtenu par hydrogénation d'un acide gras, saturé ou insaturé, linéaire ou ramifié, en C₈ à C₃₄, notamment en C₈ à C₂₆, notamment en C₁₂ à C₂₂, en particulier en C₁₆ à C₂₀ et plus particulièrement en C₁₈.

L'alcool gras peut être un alcool gras linéaire, saturé ou insaturé, en C₈ à C₃₄, de préférence un alcool gras linéaire en C₈ à C₂₆, notamment en C₁₂ à C₂₂ et plus particulièrement en C₁₈ à l'image par exemple de l'alcool stéarylique, de l'alcool oléylique et de l'alcool linoléylique.

L'alcool gras peut être un alcool gras ramifié. Selon l'invention, on entend désigner par l'expression "alcool gras ramifié" un alcool issu d'un acide gras possédant un groupe méthyle fixé sur le pénultième ou l'antépénultième atome de carbone ou plusieurs groupes méthyle répartis le long de la chaîne. Ces alcools gras ramifiés sont de préférence en C₈ à C₂₆, notamment en C₁₂ à C₂₂ et plus particulièrement en C₁₈ à l'image de l'alcool isostéarylique.

Selon des variantes de l'invention, l'au moins un estolide est de préférence un composé obtenu à partir d'un acide gras hydroxylé, préférentiellement l'acide ricinoléique, ayant subi une estérification avec un alcool gras ramifié en C₁₂ à C₂₂ et plus particulièrement en C₁₈, préférentiellement l'alcool isostéarylique.

Selon l'invention, l'au moins un estolide est de préférence un composé de Formule I: 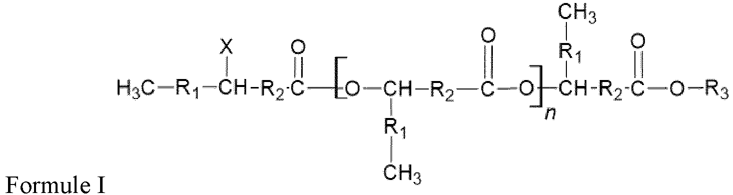 dans laquelle,
n est un entier variant de 1 à 5;
X est un atome d'hydrogène ou un groupement -OH, de préférence un groupement -OH;
R1, identiques ou différents, représentent des radicaux aliphatiques divalents, saturés ou insaturés, linéaires ou ramifiés, en C₁ - C₂₀, préférentiellement les R1 sont identiques;
R2, identiques ou différents, sont des radicaux aliphatiques divalents, saturés ou insaturés, linéaires ou ramifiés, en C₁ - C₂₀, préférentiellement les R2 sont identiques;
le nombre de carbone dans chaque unité d'acide gras étant compris dans un domaine allant de 8 à 34, de préférence de 12 à 22, préférentiellement encore de 16 à 20, en particulier 18;
R3 représente H (atome d'hydrogène) ou un groupement aliphatique, saturé ou insaturé, linéaire ou ramifié, en C₈- C₃₄, de préférence un groupement aliphatique en C₈ à C₂₆, notamment en C₁₂ à C₂₂, en particulier en C₁₆ à C₂₀ et plus particulièrement en C₁₈.

Selon des variantes de l'invention, l'au moins un estolide est un composé obtenu à partir d'un acide gras hydroxylé. Comme acide gras hydroxylé on peut citer l'acide ricinoléique ou encore les acides stéariques hydroxylés. Selon ces variantes de l'invention, l'estolide est de préférence un composé obtenu à partir d'acide ricinoléique.

Selon ces variantes, dans la Formule I, X représente un groupement -OH.

Selon ces variantes, dans la Formule I, de préférence le nombre de carbone dans chaque unité d'acide gras est compris dans un domaine allant de 16 à 20, en particulier 18. On entend par "unité d'acide gras", l'unité de formule II :

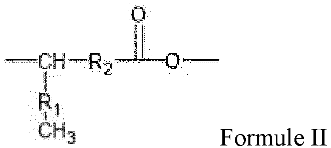

Selon des variantes de l'invention, l'estolide est un composé obtenu à partir d'un acide gras, hydroxylé ou non hydroxylé, ayant subi une estérification avec un alcool gras.

Selon ces variantes de l'invention, R3 est de préférence la chaîne carbonée issue d'un alcool gras et représente un radical aliphatique de préférence en C₁₂ à C₂₂, en particulier en C₁₆ à C₂₀ et plus particulièrement en C₁₈.

Très préférentiellement, l'au moins un estolide est un estolide d'acide ricinoléique estérifié par l'alcool isostéarylique.

Avantageusement, l'acide ricinoléique, est obtenu à partir d'huile de ricin.

### Autres plastifiants

Selon des variantes préférées de l'invention, le système plastifiant est essentiellement constitué d'au moins un estolide.

Ainsi, selon d'autres variantes de l'invention, le système plastifiant peut comprendre un ou plusieurs autres composés plastifiants parmi les résines plastifiantes et les plastifiants liquides à température ambiante (autour de 23°C) habituellement utilisés dans des compositions de caoutchouc pour le pneu.

Toute huile d'extension, qu'elle soit de nature aromatique ou non-aromatique, tout agent plastifiant liquide connu pour ses propriétés plastifiantes vis-à-vis d'élastomères diéniques peut être utilisé en complément de l'estolide comme plastifiant liquide. A titre d'exemples de plastifiants liquides utilisables dans le cadre de l'invention, on peut citer ceux choisis parmi les polymères diéniques liquides, les huiles polyoléfiniques, les huiles naphténiques, les huiles paraffiniques, les huiles DAE, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

Le lecteur comprendra qu'en vue de réduire l'empreinte environnementale, notamment les produits d'origine fossile, dans la composition de caoutchouc selon l'invention, si au moins un autre plastifiant est utilisé dans la composition de caoutchouc, celui-ci sera de préférence de nature renouvelable, notamment d'origine biosourcée.

### 4 Système de réticulation

Le système de réticulation peut être tout type de système connu de l'homme du métier dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,2 pce et 10 pce. L'accélérateur primaire de vulcanisation est utilisé à un taux préférentiel compris entre 0,5 et 10 pce, plus préférentiellement compris entre 0,5 et 5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### 5 Additifs possibles

Les compositions de caoutchouc selon l'invention peuvent comporter optionnellement également tout ou partie des additifs usuels habituellement utilisés dans les compositions d'élastomères pour pneumatique, comme par exemple, des pigments, des agents de protection tels que cires anti-ozone, anti-ozonants chimiques, anti-oxydants autres que l'antioxydant phénolique de formule générale (I), agents anti-fatigue, des promoteurs d'adhésion sur des renforts métalliques, notamment à base de sels de cobalt (comme l'acétylacétonate de cobalt, le résinate de cobalt, 2-éthylhexanoate de cobalt ou encore l'hydroxyde de cobalt), ou encore résines renforçantes (telles que décrites par exemple dans la demande WO 02/10269).

### 6 Préparation des compositions de caoutchouc

Les compositions conformes à l'invention peuvent être fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule ou plusieurs étapes thermomécaniques au cours de laquelle on introduit, dans un mélangeur approprié tel qu'un mélangeur interne usuel (par exemple de type 'Banbury'), tous les constituants nécessaires, notamment la matrice élastomère, la charge renforçante, l'estolide et les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que l'estolide et les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme flanc de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

### 7 Pneu

L'invention a également pour objet un pneu comprenant dans un de ces composants une composition de caoutchouc telle que décrite ci-dessus.

Il est possible de définir au sein du pneu trois types de zones :
- La zone radialement extérieure et en contact avec l'air ambiant, cette zone étant essentiellement constituée de la bande de roulement et du flanc externe du pneumatique.
- La zone radialement intérieure et en contact avec le gaz de gonflage, cette zone étant généralement constituée par la couche étanche aux gaz de gonflage, parfois appelée gomme intérieure (« inner liner » en anglais).
- La zone interne du pneumatique, c'est-à-dire celle comprise entre les zones extérieure et intérieure. Cette zone inclut des couches ou nappes qui sont appelées couches internes du pneumatique.

Plus particulièrement, au vu de l'amélioration significative des propriétés à rupture de la composition de caoutchouc selon l'invention par rapport à une composition comprenant un système plastifiant conventionnel d'origine fossile, la composition de caoutchouc telle que décrite ci-dessus est particulièrement appropriée pour être utilisée dans le flanc externe d'un pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples

### Mesures et tests utilisés

### Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées via un étalonnage dit de MOORE.

### Mode opératoire

La masse molaire moyenne en nombre (Mn), la masse molaire moyenne en poids (Mw) des constituants utilisables dans les compositions conformes à l'invention, sont déterminés de manière connue, par chromatographie d'exclusion stérique conventionnelle (SEC : Size Exclusion Chromatography) avec détection RI et étalonnage PS (Polystyrène). Les étalons PS sont issus du kit « PSS-kitr1l » de chez PSS-Polymers.

Pour déterminer les masses molaires moyennes, on utilise la solution de l'échantillon à 1.5 g/l, précédemment préparée et filtrée sur un filtre PTFE à 0.45µm, que l'on injecte dans le système chromatographique. L'appareillage utilisé est une chaîne chromatographique « WATERS alliance e2695 » avec un détecteur « RI 410 Waters ». Le solvant d'élution est le tétrahydrofurane, le débit est de 1 mL.min-1, la température du système de 35° C et la durée d'analyse de 50 min. Quatre colonnes AGILENT sont utilisées (2 PLGEL 5 µm MIXED-D et 2 PLGEL 3 µm MIXED-E ». Le volume injecté de la solution de l'échantillon est 100 µL.

Le logiciel d'exploitation des données chromatographiques est le système « Empower de WATERS ».

### Calorimétrie différentielle

Les températures de transition vitreuse (Tg) des élastomères sont déterminées à l'aide d'un calorimètre différentiel ("differential scanning calorimeter"), selon la norme ASTM D3418 (1999).

### Critère de rigidité à faible déformation :

La rigidité est représentée par la valeur du module G* retour à 10% lors des mesures de balayage en déformation à 60°C de 0.1 à 100% crête-crête.

Les propriétés dynamiques G*, sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, dans les conditions normales de température (60°C) selon la norme ASTM D 1349-99. On effectue un balayage en amplitude de déformation de 0,1% à 100% crête-crête (cycle aller), puis de 100% à 0,1% crête-crête (cycle retour). Le résultat exploité est le module de rigidité G* retour à 10% de déformation. Plus ce nombre est élevé, plus la rigidité à faible déformation est importante.

### Critère de rigidité à forte déformation :

La rigidité à forte déformation est représentée par les valeurs d'allongement et de contrainte à rupture mesurées lors d'essais de traction.

### Essais de traction

Ces essais de traction permettent de déterminer les contraintes d'élasticité et les propriétés à la rupture. Sauf indication différente, ils sont effectués conformément à la norme française NF ISO37 de décembre 2005. Les contraintes à la rupture (en MPa) et les allongements à la rupture (en %) sont mesurés dans les conditions normales de température (23°C ± 2°C) et d'hygrométrie (50 ± 10% d'humidité relative). Un traitement des enregistrements de traction permet également de tracer la courbe de module en fonction de l'allongement.

### Essais

### Obtention de l'estolide.

Le plastifiant biosourcé à base d'estolide d'acide ricinoléique a été obtenu selon le protocole suivants :

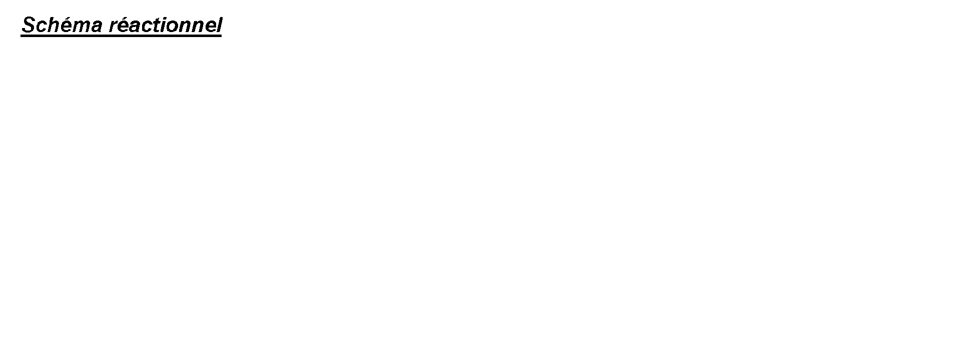

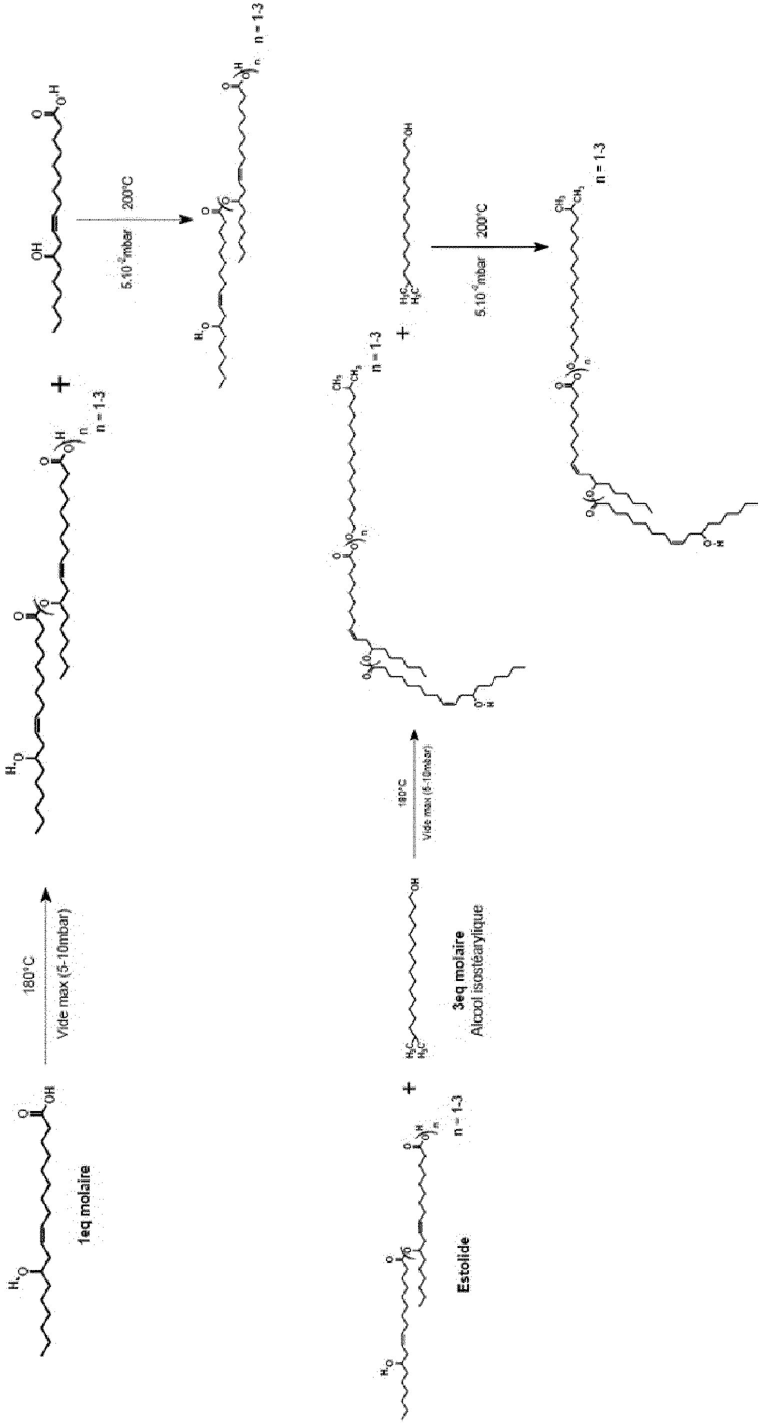

L'obtention de l'estolide esterifié a été réalisée en quatre étapes. La première a consisté à synthétiser un estolide avec une structure bien définie, entre 2 et 4 enchaînements d'unités d'acide ricinoléique. La seconde étape a consisté à distiller l'excès d'acide présent dans le milieu à l'aide d'une distillation moléculaire. L'estérification des fonctions acides disponibles sur l'estolide a ensuite été réalisée avec un excès d'alcool isostéarylique. Enfin la dernière étape a consisté à distiller l'excès d'alcool n'ayant pas réagi.

### Etape 1 : Synthèse de l'oligomère

### Mode opératoire

Réacteur batch agité
Conditions : 180°C / 600mbar / 14h
Suivi analytique : SEC (Equivalent PS)

### Etape 2 : distillation moléculaire dite "short path"

### Conditions :

Température du piège : -22°C
Vitesse de la pompe d'ajout : 230mL/h
Température. double enveloppe : 200°C
Vide : 5. 10⁻² mbar
Suivi analytique : SEC (Equivalent PS)

### Etape 3 : estérification des fonctions acides

Ajout de 3éq. molaire d'alcool isostéarylique

### Mode opératoire

Réacteur batch agité
Conditions : 160°C / sous vide pour distiller l'eau formée au cours de la réaction
Suivi analytique : Indice d'acide selon la norme NF EN ISO 660 et SEC (Equivalent PS)

### Etape 4 : Distillation de l'excès d'alcool dite "short-path"

### Conditions :

Température du piège : -22°C
Vitesse de la pompe d'ajout : 230mL/h
Température double enveloppe : 200°C
Vide : 8,7.10⁻² mbar
Suivi analytique : SEC (Equivalent PS)

Le tableau ci-dessous donne les caractéristiques de masse molaire moyenne en poids (Mw) et de température de transition vitreuse (Tg) du plastifiant biosourcé conforme à l'invention en comparaison de l'huile non biosourcée (Huile MES).

**Tableau 1**

| **Composants** | **Nature** | **Tg (°C)** | **Mw (g.mol)** |
|---|---|---|---|
| Huile MES (8) | Parafinique | -60 | 711 |
| **Huile** n°1 (9) | Estolide d'acide ricinoléique | -68 | 2062 |

### Compositions

La composition dite de référence T est présentée dans le tableau 2 ci-dessous et elle comprend une huile MES qui est d'origine fossile.

A noter que la composition C1, conforme à la présente invention, est formulée de sorte à être à même dilution volumique en huile (%v) que la composition témoin T.

Les compositions sont les suivantes (en pce).

**Tableau 2**

| Composants | **T** | **C₁** |
|---|---|---|
| NR(1) | 35 | 35 |
| BR (2) | 65 | 65 |
| Noir (3) | 48 | 48 |
| 6PPD (4) | 1.5 | 1.5 |
| IPPD (5) | 1.5 | 1.5 |
| TMQ (6) | 1 | 1 |
| Cire (7) | 1 | 1 |
| Huile MES (8) | 18 | |
| Huile n°1 (9) | | 18 |
| ZnO (10) | 2.4 | 2.4 |
| Ac. Stéarique (11) | 1 | 1 |
| Acc (12) | 1.4 | 1.4 |
| Soufre | 1.4 | 1.4 |

| | | |
|---|---|---|
| (1) Caoutchouc naturel dont la Tg égale à -70°C (2) Poly butadiène dont la Tg égale à -108°C (3) Noir ASTM « N550 » de la société CABOT (4) « Santoflex 6PPD » de la société SOLUTIA (5) « Santoflex IPPD » de la société SOLUTIA (6) Antioxidant « DQ » de la société Akrochem (7) Cire anti-ozone « Varazon 6500 » de la société Sasol (8) Huile MES « Flexion 683 » de la société Exxon-Mobil (9) Huile n°1 : Estolide d'acide ricinoléique de Mw=2062 g/mol et de Tg=-68°C (10) Oxyde de zinc de grade industriel - société Umicore (11) Stéarine « Pristerene 4931 » de la société Uniqema (12) Cylohexyl-benzothiazyle sulfénamide CBS de la société AKROCHEM | | |

### Préparation des compositions

Les compositions de caoutchouc dont le détail de la formulation figure dans le tableau 2, ont été préparées de la manière suivante :
On introduit la matrice élastomère dans un mélangeur interne (taux de remplissage final : environ 70% en volume et vitesse des palettes 50 tr/min), dont la température initiale de cuve est d'environ 90°C. Lorsque la température atteint 100°C, on introduit le noir de carbone et le plastifiant. On conduit alors un travail thermomécanique (phase non-productive) en une étape, qui dure au total environ 3 à 4 min, jusqu'à atteindre une température maximale de « tombée » de 160°C. On récupère le mélange ainsi obtenu, on le refroidit puis on incorpore le soufre et les accélérateurs de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc et vulcanisées à leur optimum à une température de 160°C pour les mesures de leur propriétés physiques et mécaniques qui sont exposées dans le tableau 3.

### Résultats

**Tableau 3**

| **Propriétés** | **Descripteurs** | **T** | **C1** |
|---|---|---|---|
| Dynamiques: en Déformation | G*10% retour à 60°C (MPa) | 1.2 | 1.2 |
| Mécaniques: Traction uniaxiale | Allongement Rupt (%) | 100 | 111 |
| | Contrainte Rupt (MPa) | 100 | 103 |

Le critère de rigidité G*10% en déformation est inchangé. Les propriétés mécaniques de la composition de caoutchouc comprenant un plastifiant biosourcé selon l'invention sont maintenues à faible déformation par rapport aux propriétés mécaniques d'une composition de caoutchouc standard comprenant un plastifiant conventionnel d'origine fossile.

Par ailleurs et de manière surprenante, la composition conforme à l'invention comprenant un plastifiant biosourcé permet d'améliorer la résistance à la rupture par une amélioration de la rigidité à forte déformation, car l'allongement et la contrainte à rupture sont significativement améliorés par rapport à la composition de caoutchouc standard comprenant un plastifiant conventionnel d'origine fossile.

## Revendications

1. Composition de caoutchouc à base d'au moins :
- 100 pce d'une matrice élastomère comprenant un élastomère isoprénique et un élastomère butadiénique,
- 20 à 120 pce d'une charge renforçante comprenant du noir de carbone à titre de charge majoritaire,
- 5 à 120 pce d'un système plastifiant comprenant au moins un estolide de masse molaire moyenne en poids (Mw) inférieure à 5000g/mol déterminé par chromatographie d'exclusion stérique (SEC), la méthode étant décrite dans la description,
- un système de réticulation.

2. Composition selon la revendication précédente dans laquelle le taux d'élastomère isoprénique est compris dans un domaine allant de 10 à 60 pce, de préférence de 15 à 50 pce.

3. Composition selon l'une quelconque des revendications précédentes dans laquelle l'élastomère isoprénique comprend majoritairement du caoutchouc naturel.

4. Composition selon l'une quelconque des revendications précédentes dans laquelle le taux d'élastomère butadiénique est compris dans un domaine allant de 40 à 90 pce, de préférence de 50 à 85 pce.

5. Composition selon l'une quelconque des revendications précédentes dans laquelle l'élastomère butadiénique est un polybutadiène.

6. Composition selon l'une quelconque des revendications précédentes dans laquelle la charge renforçante est essentiellement constituée de noir de carbone.

7. Composition selon l'une quelconque des revendications précédentes dans laquelle le noir de carbone est présent selon un taux compris dans un domaine allant de 20 pce à 100 pce, de préférence allant de 20 à 80 pce, plus préférentiellement allant de 25 à 60 pce.

8. Composition selon l'une quelconque des revendications précédentes dans laquelle le taux d'estolide(s) est compris dans un domaine allant de 5 à 50 pce, de préférence de 10 à 30 pce.

9. Composition selon l'une quelconque des revendications précédentes dans laquelle le système plastifiant comprend de 10 à 100% en poids d'au moins un estolide, de préférence 40 à 100% en poids, par rapport au poids total du système plastifiant.

10. Composition selon l'une quelconque des revendications précédentes dans laquelle l'au moins un estolide est un estolide estérifié avec un alcool gras, saturé ou insaturé, linéaire ou ramifié, en C₈ à C₃₄.

11. Composition selon l'une quelconque des revendications précédentes dans laquelle l'au moins un estolide est un estolide d'un acide gras, saturé ou insaturé, linéaire ou ramifié, en C₁₂ à C₂₂, en particulier en C₁₆ à C₂₀ et plus particulièrement en C₁₈.

12. Composition selon l'une quelconque des revendications précédentes dans laquelle l'au moins un estolide est un estolide d'un acide gras hydroxylé, de préférence l'acide ricinoléique.

13. Composition selon l'une quelconque des revendications précédentes dans laquelle l'au moins un estolide est un estolide estérifié avec un alcool gras ramifié en C₁₂ à C₂₂, de préférence en C₁₆ à C₂₀ et plus particulièrement en C₁₈, de préférence encore avec l'alcool isotéarylique.

14. Composition selon l'une quelconque des revendications précédentes dans laquelle l'au moins un estolide est un composé de formule I: 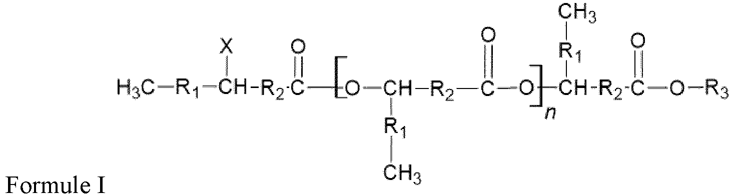 dans laquelle,
n est un entier variant de 1 à 5;
X est un atome d'hydrogène ou un groupement -OH, de préférence un groupement -OH;
R1, identiques ou différents, représentent des radicaux aliphatiques divalents, saturés ou insaturés, linéaires ou ramifiés, en C₁ - C₂₀, préférentiellement les R1 sont identiques;
R2, identiques ou différents, sont des radicaux aliphatiques divalents, saturés ou insaturés, linéaires ou ramifiés, en C₁ - C₂₀, préférentiellement les R2 sont identiques;
le nombre de carbone dans chaque unité d'acide gras étant compris dans un domaine allant de 8 à 34, de préférence de 12 à 22, préférentiellement encore de 16 à 20, en particulier 18;
R3 représente H (atome d'hydrogène) ou un groupement aliphatique, saturé ou insaturé, linéaire ou ramifié, en C₈- C₃₄, de préférence un groupement aliphatique en C₈ à C₂₆, de préférence encore en C₁₂ à C₂₂, en particulier en C₁₆ à C₂₀ et plus particulièrement en C₁₈.

15. Pneumatique pourvu d'un flanc externe, ledit flanc externe comprenant au moins une composition de caoutchouc selon l'une quelconque des revendications précédentes.

## Patentansprüche

1. Kautschukzusammensetzung auf Basis von mindestens:
- 100 phe einer Elastomermatrix, die ein Isopren-Elastomer und ein Butadien-Elastomer umfasst,
- 20 bis 120 phe eines verstärkenden Füllstoffs, der als hauptsächlichen Füllstoff Ruß umfasst,
- 5 bis 120 phe eines Weichmachersystems, umfassend mindestens ein Estolid mit einer gewichtsmittleren Molmasse (Mw) von weniger als 5000 g/mol, bestimmt durch Größenausschlusschromatographie (SEC), wobei die Methode in der Beschreibung beschrieben ist,
- einem Vernetzungssystem.

2. Zusammensetzung nach dem vorhergehenden Anspruch, wobei der Gehalt an Isopren-Elastomer in einem Bereich von 10 bis 60 phe, vorzugsweise von 15 bis 50 phe, liegt.

3. Zusammensetzung nach einem der vorhergehenden Ansprüche, wobei das Isopren-Elastomer hauptsächlich Naturkautschuk umfasst.

4. Zusammensetzung nach einem der vorhergehenden Ansprüche, wobei der Gehalt an Butadien-Elastomer in einem Bereich von 40 bis 90 phe, vorzugsweise von 50 bis 85 phe, liegt.

5. Zusammensetzung nach einem der vorhergehenden Ansprüche, wobei es sich bei dem Butadien-Elastomer um ein Polybutadien handelt.

6. Zusammensetzung nach einem der vorhergehenden Ansprüche, wobei der verstärkende Füllstoff im Wesentlichen aus Ruß besteht.

7. Zusammensetzung nach einem der vorhergehenden Ansprüche, wobei der Ruß in einem Gehalt in einem Bereich von 20 phe bis 100 phe, vorzugsweise in einem Bereich von 20 bis 80 phe, weiter bevorzugt in einem Bereich von 25 bis 60 phe, vorliegt.

8. Zusammensetzung nach einem der vorhergehenden Ansprüche, wobei der Gehalt an Estolid(en) in einem Bereich von 5 bis 50 phe, vorzugsweise von 10 bis 30 phe, liegt.

9. Zusammensetzung nach einem der vorhergehenden Ansprüche, wobei das Weichmachersystem 10 bis 100 Gew.-% mindestens eines Estolids, vorzugsweise 40 bis 100 Gew.-%, bezogen auf das Gesamtgewicht des Weichmachersystems, umfasst.

10. Zusammensetzung nach einem der vorhergehenden Ansprüche, wobei es sich bei dem mindestens einen Estolid um ein mit einem linearen oder verzweigten, gesättigten oder ungesättigten C₈- bis C₃₄-Fettalkohol verestertes Estolid handelt.

11. Zusammensetzung nach einem der vorhergehenden Ansprüche, wobei es sich bei dem mindestens einen Estolid um ein Estolid einer linearen oder verzweigten, gesättigten oder ungesättigten C₁₂- bis C₂₂-, insbesondere C₁₆- bis C₂₀- und spezieller C₁₈-Fettsäure handelt.

12. Zusammensetzung nach einem der vorhergehenden Ansprüche, wobei es sich bei dem mindestens einen Estolid um ein Estolid einer hydroxylierten Fettsäure, vorzugsweise Ricinolsäure, handelt.

13. Zusammensetzung nach einem der vorhergehenden Ansprüche, wobei es sich bei dem mindestens einen Estolid um ein mit einem verzweigten C₁₂- bis C₂₂-, vorzugsweise C₁₆- bis C₂₀- und spezieller C₁₈-Fettalkohol, noch weiter bevorzugt Isostearylalkohol, verestertes Estolid handelt.

14. Zusammensetzung nach einem der vorhergehenden Ansprüche, wobei es sich bei dem mindestens einen Estolid um eine Verbindung der Formel I handelt: 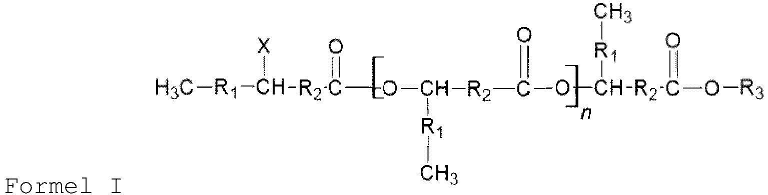 in der
n eine ganze Zahl im Bereich von 1 bis 5 ist;
X ein Wasserstoffatom oder eine -OH-Gruppe, vorzugsweise eine -OH-Gruppe, ist;
die Reste R1, die gleich oder verschieden sein können, für lineare oder verzweigte, gesättigte oder ungesättigte zweiwertige aliphatische C₁-C₂₀-Reste stehen, vorzugsweise die Reste R1 gleich sind;
die Reste R2, die gleich oder verschieden sein können, lineare oder verzweigte, gesättigte oder ungesättigte zweiwertige aliphatische C₁-C₂₀-Reste sind, vorzugsweise die Reste R2 gleich sind;
wobei die Zahl der Kohlenstoffatome in jeder Fettsäureeinheit in einem Bereich von 8 bis 34, vorzugsweise von 12 bis 22, bevorzugt von 16 bis 20, liegt und insbesondere 18 beträgt;
R3 für H (Wasserstoffatom) oder eine lineare oder verzweigte, gesättigte oder ungesättigte aliphatische C₈-C₃₄ -Gruppe, vorzugsweise eine aliphatische C₈- bis C₂₆-, weiter bevorzugt C₁₂- bis C₂₂-, insbesondere C₁₆- bis C₂₀-und spezieller C₁₈-Gruppe steht.

15. Reifen mit einer äußeren Seitenwand, wobei die äußere Seitenwand mindestens eine Kautschukzusammensetzung nach einem der vorhergehenden Ansprüche umfasst.

## Claims

1. Rubber composition based on at least:
- 100 phr of an elastomer matrix comprising an isoprene elastomer and a butadiene elastomer,
- 20 to 120 phr of a reinforcing filler comprising carbon black as predominant filler,
- 5 to 120 phr of a plasticizing system comprising at least one estolide with a weight-average molar mass (Mw) of less than 5000 g/mol determined by size exclusion chromatography (SEC), the method being described in the description,
- a crosslinking system.

2. Composition according to the preceding claim, in which the content of isoprene elastomer is within a range extending from 10 to 60 phr, preferably from 15 to 50 phr.

3. Composition according to either one of the preceding claims, in which the isoprene elastomer predominantly comprises natural rubber.

4. Composition according to any one of the preceding claims, in which the content of butadiene elastomer is within a range extending from 40 to 90 phr, preferably from 50 to 85 phr.

5. Composition according to any one of the preceding claims, in which the butadiene elastomer is a polybutadiene.

6. Composition according to any one of the preceding claims, in which the reinforcing filler consists essentially of carbon black.

7. Composition according to any one of the preceding claims, in which the carbon black is present at a content within a range extending from 20 phr to 100 phr, preferably ranging from 20 to 80 phr, more preferentially ranging from 25 to 60 phr.

8. Composition according to any one of the preceding claims, in which the content of estolide(s) is within a range extending from 5 to 50 phr, preferably from 10 to 30 phr.

9. Composition according to any one of the preceding claims, in which the plasticizing system comprises from 10% to 100% by weight of at least one estolide, preferably from 40% to 100% by weight, relative to the total weight of the plasticizing system.

10. Composition according to any one of the preceding claims, in which the at least one estolide is an estolide esterified with a linear or branched, saturated or unsaturated C₈ to C₃₄ fatty alcohol.

11. Composition according to any one of the preceding claims, in which the at least one estolide is an estolide of a linear or branched, saturated or unsaturated C₁₂ to C₂₂, in particular C₁₆ to C₂₀ and more particularly C₁₈ fatty acid.

12. Composition according to any one of the preceding claims, in which the at least one estolide is an estolide of a hydroxy fatty acid, preferably ricinoleic acid.

13. Composition according to any one of the preceding claims, in which the at least one estolide is an estolide esterified with a branched C₁₂ to C₂₂, preferably C₁₆ to C₂₀ and more particularly C₁₈ fatty alcohol, more preferably with isostearyl alcohol.

14. Composition according to any one of the preceding claims, in which the at least one estolide is a compound of formula I: 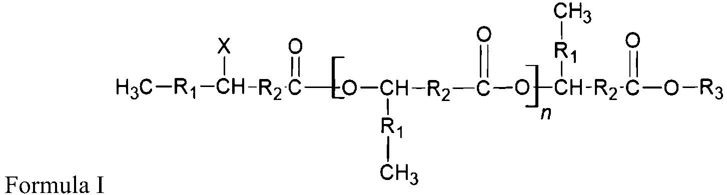 in which:
n is an integer ranging from 1 to 5;
X is a hydrogen atom or an -OH group, preferably an -OH group;
R₁, which may be identical or different, represent linear or branched, saturated or unsaturated, divalent aliphatic C₁ - C₂₀ radicals, preferentially the R₁ are identical;
R₂, which may be identical or different, are linear or branched, saturated or unsaturated, divalent aliphatic C₁ - C₂₀ radicals, preferentially the R₂ are identical;
the number of carbons in each fatty acid unit being within a range extending from 8 to 34, preferably from 12 to 22, more preferentially from 16 to 20, in particular 18;
R₃ represents H (hydrogen atom) or a linear or branched, saturated or unsaturated aliphatic C₈-C₃₄ group, preferably an aliphatic C₈ to C₂₆, more preferably C₁₂ to C₂₂, in particular C₁₆ to C₂₀ and more particularly C₁₈ group.

15. Tyre having an outer sidewall, said outer sidewall comprising at least one rubber composition according to any one of the preceding claims.
